# FASCICULE DE BREVET EUROPEEN

(11) **EP 3 863 892 B1**
(45) Date de publication et mention de la délivrance du brevet: **21.06.2023**
(21) Numéro de dépôt: 19782585.4
(22) Date de dépôt: 02.10.2019
(51) Int. Cl.: B60R 11/02

(54) **CAISSE DE VÉHICULE AUTOMOBILE ÉQUIPÉ D'UN MODULE DE HAUT-PARLEUR**
KRAFTFAHRZEUGKAROSSERIE MIT EINEM LAUTSPRECHERMODUL
MOTOR VEHICLE BODY EQUIPPED WITH A LOUDSPEAKER MODULE

(30) Priorité: 09.10.2018 FR 1871151
(43) Date de publication de la demande: 18.08.2021
(73) Titulaire: Renault s.a.s, 92100 Boulogne Billancourt (FR)
(72) Inventeur: CONDE IGLESIAS, Manuel, 78140 VELIZY-VILLACOUBLAY (FR)
(74) Mandataire: Renault Group
(86) Numéro de dépôt international: PCT/EP2019/076690
(87) Numéro de publication internationale: WO 2020/074339

(56) Documents cités:
- DE-A1-102009 041 552
- DE-B3-102005 046 594

## Description

La présente invention est du domaine des véhicules dont la caisse comprend une adaptation dédiée à l'intégration d'un module de haut-parleur.

L'invention porte plus particulièrement sur une caisse de véhicule, notamment une automobile, comportant au moins un passage de roue, notamment un passage de roue arrière, réalisé par l'assemblage d'au moins une portion d'une doublure latérale de caisse avec une pièce interne, la doublure latérale de caisse étant notamment une doublure de custode arrière délimitant une partie externe du passage de roue, la pièce interne étant une pièce de liaison de la doublure latérale à un plancher, notamment un plancher de coffre, la pièce interne délimitant une partie intérieure du passage de roue. DE20051046594B3 divulgue une caisse de véhicule conformément au préambule de la revendication 1.

Un véhicule automobile est généralement équipé d'un module de haut-parleur, par exemple un caisson de basses. Un tel caisson de basses est implanté en général au sein du plancher du véhicule automobile, par exemple au sein du plancher arrière. Seulement l'évolution de la réglementation en termes de dépollution des moteurs à combustion interne engendre des systèmes de traitement des polluants complexes et encombrants. Le volume disponible au sein du plancher arrière est alors insuffisant pour recevoir un module de haut-parleur.

Un véhicule automobile est en outre généralement réalisé avec une caisse dont la structure est réalisée par un assemblage de pièces de tôlerie de différentes épaisseurs de sorte que le déplacement du module de haut-parleur vers une partie de la caisse autre que le plancher engendre de nouvelles difficultés d'intégration. A titre d'exemple, nous avons relevé comme problématique d'intégration la conformation particulière et complexe des pièces de la caisse répondant aux contraintes de style des véhicules, les normes métier d'emboutissage qui contraint la géométrie des pièces embouties de tôlerie afin d'éviter tout déchirement de matière, mais aussi la tenue à la déformation des zones de fixation du module de haut-parleur lorsque celles-ci sont réalisées dans des tôles d'épaisseur insuffisante.

Le but de l'invention est de permettre l'implantation d'un module de haut-parleur remédiant aux inconvénients ci-dessus. En particulier, l'invention propose une caisse de véhicule automobile supportant un module de haut-parleur de manière simple et fiable, et étant peu onéreuse à produire. Pour atteindre cet objectif l'invention porte sur une caisse de véhicule automobile comportant au moins un passage de roue, notamment un passage de roue arrière, réalisé par l'assemblage d'au moins une portion d'une doublure latérale de caisse avec une pièce interne, la doublure latérale de caisse étant une doublure de custode arrière délimitant une partie externe du passage de roue, la pièce interne étant une pièce de liaison de la doublure latérale à un plancher, notamment un plancher de coffre, la pièce interne délimitant une partie intérieure du passage de roue. La caisse comprend une ouverture au travers de laquelle est rapporté et soudé un renfort d'un support inférieur destiné à assurer au moins en partie le montage d'un module de haut-parleur, notamment un caisson de basses.

La pièce interne peut comprendre une paroi supérieure, notamment une partie incurvée autour des axes longitudinal et transversal de sorte à délimiter la partie sommitale du passage de roue, l'ouverture de la pièce interne est en forme de trou oblong d'axe approximativement longitudinal réalisé au niveau de la paroi supérieure.

Le renfort de support inférieur peut comprendre en partie sommitale une surface d'appui contre laquelle une zone inférieure du module de haut-parleur est apte à venir en appui, la surface d'appui étant notamment plane ou sensiblement plane et disposée en saillie verticale hors de la pièce interne, notamment de la paroi supérieure.

Le renfort de support inférieur peut comprendre une ouverture en forme de trou oblong centrée ou sensiblement centrée dans la surface d'appui.

La caisse peut comprendre un moyen d'étanchéité, notamment au moins un joint à cellules fermées rapporté le long d'un pourtour de l'ouverture du renfort de support inférieur, notamment un joint réalisé d'un seul tenant s'étendant le long de la totalité d'un pourtour de l'ouverture du renfort de support inférieur.

Le support inférieur est une chape de fixation destinée à assurer le montage réversible du module de haut -parleur, la chape de fixation est rapportée soudée sur le renfort de support inférieur de manière à l'entourer partiellement, notamment la partie du renfort disposée en saillie verticale hors de la paroi supérieure.

La chape de fixation peut comprendre un bandeau de liaison au-delà duquel s'étend en saillie au moins une patte de fixation, notamment deux pattes de fixation, disposée dans un plan sensiblement identique à celui de la surface d'appui de la partie sommitale du renfort de support inférieur. Le renfort de support inférieur comprend une collerette périphérique réalisée notamment par emboutissage et disposée par dessous la pièce interne, le long d'un contour de l'ouverture du renfort de support inférieur, le renfort de support inférieur étant fixé à la pièce interne notamment par soudure.

Le passage de roue peut être un élément constitutif d'un caisson de basses du module de haut-parleur, notamment une tuyère acoustique. La caisse peut comprendre un renfort de doublure latérale destiné à la fixation d'un support supérieur destiné à assurer au moins en partie le montage du module de haut-parleur.

Le renfort de doublure latérale peut être disposé sur un côté extérieur de la doublure latérale, le renfort de doublure latérale comprenant au moins une vis traversant la doublure latérale destinées au montage réversible du support supérieur, notamment un pontet de fixation liant le module de haut-parleur à la doublure latérale de caisse.

L'invention porte aussi sur un véhicule, notamment une automobile, comprenant une caisse telle que définie précédemment.

Ces objets, caractéristiques et avantages de la présente invention seront exposés en détail dans la description suivante d'un mode de réalisation faite à titre non-limitatif en relation avec les figures jointes.
[Fig. 1] représente de manière schématique l'intégration d'un module de haut-parleur sur un côté latérale de caisse comportant un passage de roue arrière.
[Fig. 2] représente de manière schématique le côté extérieur d'une doublure latérale de caisse sur laquelle est rapporté une pièce de renfort destinée à la fixation du module de haut-parleur.
[Fig. 3] représente une vue en coupe III-III de la figure 1.
[Fig. 4] représente selon une vue éclatée partielle d'un côté latéral de caisse doté d'éléments de support supérieur et inférieur destiné à coopérer avec un module de haut-parleur, ainsi que d'éléments de renfort de ces supports.
[Fig. 5] représente un agrandissement de l'agencement de la figure 1 détaillant les moyens de fixation inférieure du module de haut-parleur le reliant à la caisse du véhicule.
[Fig. 6] représente de manière schématique une coupe transversale de l'agencement de la figure 1 relevant les moyens d'étanchéité et de fixation mis en oeuvre pour le support du module de haut-parleur.

Bien que la description suivante se rapporte au passage de roue arrière gauche, la solution pourrait être adoptée pour un passage de roue arrière droit.

La direction selon laquelle le véhicule se déplace en ligne droite est définie comme étant la direction longitudinale X. Par convention, la direction perpendiculaire à la direction longitudinale X, située dans un plan parallèle au sol, est nommée direction transversale Y. La troisième direction, perpendiculaire aux deux autres, est nommée direction verticale Z.

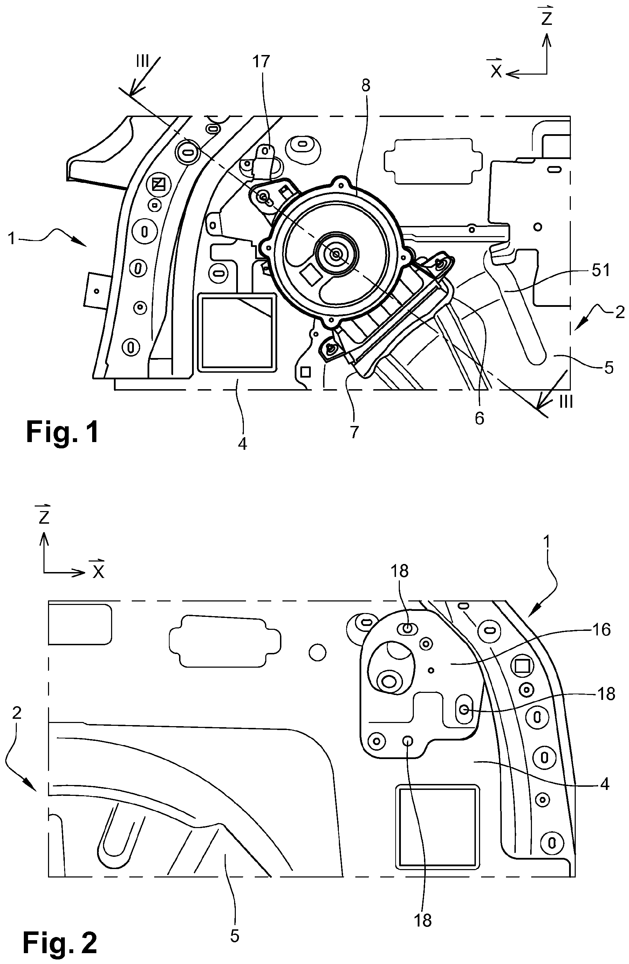

La figure 1 représente l'agencement d'un module de haut-parleur 8 sur une caisse 1 de véhicule automobile, plus particulièrement sur le passage 2 de roue arrière 3.

Le module de haut-parleur est ici représenté dans une position en retrait vers l'arrière de la partie sommitale du passage de roue qui est inclinée vers le bas. C'est la raison pour laquelle ce dernier prend une position d'inclinaison. Le module de haut-parleur 8 est logé dans une alcôve formée par la doublure interne 4 de caisse et la pièce interne 5. La pièce interne 5 est une pièce de liaison reliant la doublure latérale 4 de caisse au plancher (non représenté) du véhicule. Le passage 2 de roue est ainsi composé pour partie d'un passage interne de roue réalisé par la pièce interne 5 et pour partie d'un passage externe de roue réalisé par la doublure latérale 4 de caisse. La doublure latérale 4 de caisse est une doublure de custode dont la partie inférieure comprend le passage de roue dont le galbe est défini au regard de la typologie de roue.

La caisse 1 comprend aussi une pièce de carrosserie visible de l'extérieur du véhicule, qui est rapportée par l'extérieur contre la doublure interne 4 de caisse. Cette pièce de carrosserie est un côté de caisse 10. L'assemblage à superposition de la doublure interne 4 de caisse et de la pièce interne 5 créé la passage 2 de roue. Le passage de roue interne est soudé au passage de roue externe. Préalablement à cet assemblage, un renfort 6, 16 est rapporté et soudé sur la doublure latérale 4 ou sur la pièce interne 5.

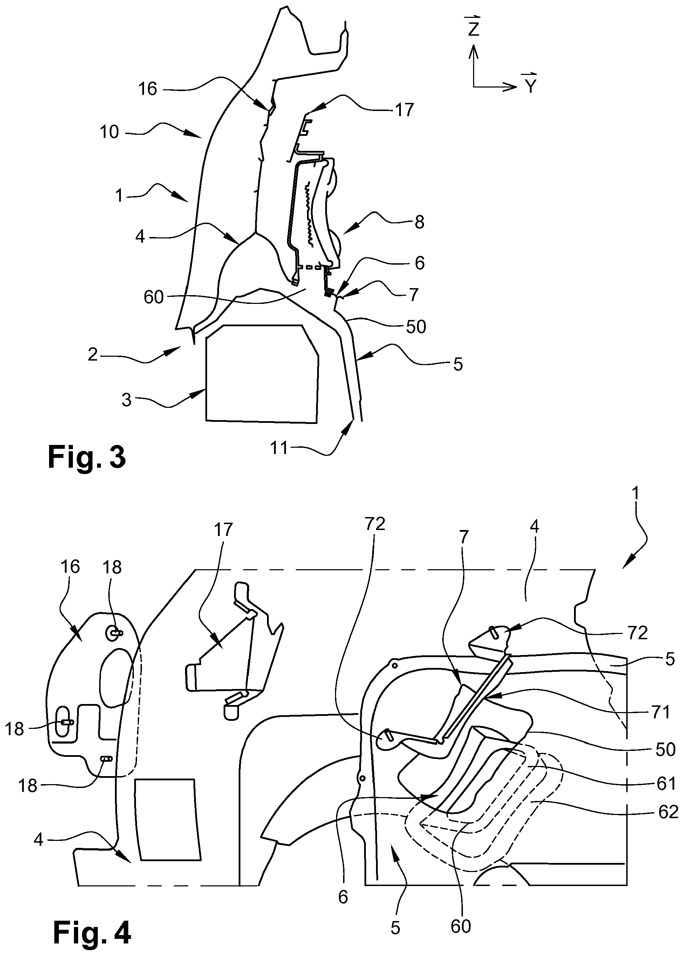

Un renfort 16 destiné à la fixation d'un support supérieur 17 du module de haut-parleur est rapporté à superposition de la face externe de la doublure latérale 4, au niveau d'une zone de fixation de la doublure latérale 4 qui est destinée à former une zone de fixation du support supérieur 17 du module de haut-parleur, comme cela est notamment rendu visible aux figures 2 et 3. Comme illustré sur la figure 1, le renfort 17 est selon un axe transversal disposé entre la doublure interne 4 et le côté de caisse 10. Dans ce qui suit, le renfort 16 est aussi qualifié de renfort 16 de support supérieur 17. Le renfort 16 est réalisé à partir d'une plaque d'acier d'épaisseur supérieure à celle utilisée à la fabrication de la doublure 4 de caisse. Du fait de cette épaisseur accrue, le renfort 16 a une épaisseur comprise entre 1 et 1,5 mm tandis que la doublure intérieure est de moindre épaisseur, comprise par exemple entre 0,6 et 0,9 mm, notamment 0,65 mm, des vis 18 fixation peuvent être fixée au renfort 16. Les zones de fixation des vis sont rigidifiées par des nervures périphériques. Le renfort 16 est allégé par la présence d'une ouverture centrale par rapport aux vis 18 qui sont ici au nombre de trois. Les vis 18 traversent la doublure latérale 4 par des trous dédiés. Elles permettent l'assemblage par serrage du support supérieur 17 qui vient se loger dans l'alcôve, un renfoncement du côté de caisse situé au niveau de l'extrémité arrière du coffre.

Le support supérieur 17 est une pièce réalisée par pliage d'une tôle d'acier de manière à former un pontet de fixation qui est apte à assurer un alignement approximativement à la verticale du module de haut-parleur 8. La figure 4 représente en perspective le support supérieur 17. Quel que soit le profil de la doublure latérale 4, le support supérieur 17 assure le lien mécanique entre la doublure latérale 4 et le module de haut-parleur, notamment sa partie sommitale passant par l'axe III-III de la figure 1. Le support supérieur 17 est comprend des ouvertures destinées au passage des vis 18 du renfort 16. Le support supérieur 17 est alors fixé par des écrous. Le support supérieur comprend également une vis de fixation qui est destiné au montage réversible du module de haut-parleur, comme cela est rendu visible à la figure 1.

Une fois le support supérieur 17 assemblé à la doublure latérale 4, cette dernière est agencée entre le renfort 16 et le support supérieur 17.

La fixation de module de haut-parleur 8 est aussi réalisée au moyen d'un support inférieur 7 qui va à présent être détaillé. Le support inférieur 7 est visible aux figures 1, 3, 4, 5 et 6. Le support inférieur 7 est associé à un renfort 6 qui sera par la suite aussi qualifié de renfort 6 de support inférieur 7. Le renfort 6 assure la liaison mécanique du support inférieur 7 au passage interne de roue qui est réalisé par la pièce interne 5. Quel que soit le galbe de la pièce interne 5, notamment de la paroi supérieure 51 de la pièce interne 5, le renfort 6 passe au travers d'une ouverture 50 en ce sens qu'il s'étend en saillie verticalement hors de la paroi supérieure 51 dans laquelle est réalisée l'ouverture 50. Le fait d'un tel agencement permet au renfort 6 de créer une surface d'appui 61 contre laquelle le module de haut-parleur est rapporté en appui.

Selon un mode de réalisation du module de haut-parleur 8, la surface d'appui 61 comprend un moyen d'étanchéité 9, tel un joint d'étanchéité, notamment à cellules fermées, collé directement sur une interface du module de haut-parleur 8, l'interface étant une embase de fixation du module 8. Une fois le module de haut-parleur 8 rapporté et fixé à la caisse, l'étanchéité est obtenue par l'écrasement du joint 9 sur la zone 61 du renfort 6.

Selon une variante de réalisation, la caisse peut comprendre un moyen d'étanchéité 9, notamment au moins un joint à cellules fermées rapporté directement le long d'un pourtour de l'ouverture 60 du renfort de support inférieur 6. Le joint d'étanchéité peut être réalisé d'un seul tenant et s'étendant le long de la totalité d'un pourtour de l'ouverture du renfort de support inférieur.

La surface d'appui 61 est réalisée au niveau de la partie sommitale du renfort 6 de support inférieur 7 contre laquelle une zone inférieure du module de haut-parleur 8 positionnée en appui. Avantageusement, la surface d'appui 61 est plane ou sensiblement plane. Quel que soit le galbe de la paroi supérieure 51, le renfort 6 créé une surface d'appui adaptée au module de haut-parleur 8.

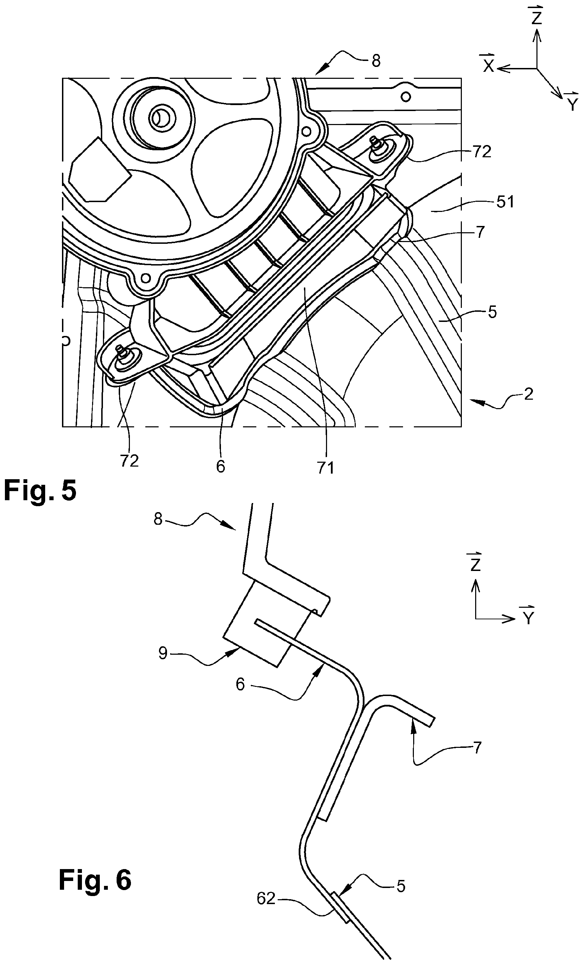

Le renfort 6 de support inférieur 7 comprend une ouverture 60 en forme de trou oblong centrée ou sensiblement centrée dans la surface d'appui 61. L'ouverture 50 est en forme sensiblement identique en ce sens qu'elle peut être aussi en forme trou oblong d'axe approximativement longitudinal X. Le renfort 6 comprend une collerette 62 périphérique réalisée notamment par emboutissage qui est en partie rendue visible à la figure 6. La collerette 62 est disposée par dessous la pièce interne 5, le long d'un contour de l'ouverture 50 de sorte à rendre assurer une fixation par soudure, notamment des points de soudure électrique.

Les ouvertures 50, 60 de la pièce interne 5 et du renfort 6 de support inférieur sont sensiblement coaxiales. Un tel agencement permet de créer une voie de communication entre le module de haut-parleur 8 et le passage 2 de roue de sorte que la caisse 1 du véhicule est un élément du caisson de basses du module de haut-parleur qui donne un rendu acoustique remarquable. L'avantage réside également dans le fait que le module de haut-parleur 8 est de faible volume puisque le volume de caisson de basse est réalisé pour partie par la caisse elle-même.

Le passage 2 de roue comprend un écran intérieur 11 qui vise notamment à empêcher la remontée d'air et de projectiles vers la caisse, notamment vers les ouvertures 50, 60 qui réalisent une voie de communication entre intérieur de la caisse et l'extérieure.

Le support inférieur 7 est une chape de fixation sur laquelle la partie inférieure du module de haut-parleur est directement fixée, préférentiellement par vissage de sorte à rendre le montage réversible, ce qui est utile en cas de remplacement en après-vente. Le support inférieur 7 est réalisé à partir d'une plaque d'acier pliée de telle sorte que la chape comprend un bandeau 71 de liaison au-delà duquel s'étend en saillie au moins une patte 72 de fixation, notamment deux pattes de fixation sur lesquelles le module de haut-parleur est vissé, comme cela est rendu visible sur les figures 1 et 5. Lorsque le support inférieur 7 est soudé au renfort 6, les pattes de fixation 72 sont disposées dans un plan sensiblement identique à celui de la surface d'appui 61 de la partie sommitale du renfort 6 de support inférieur 7. La partie sommitale du bandeau 71 comprend un bord tombé qui lui confère une rigidité augmentée. Le bord tombé s'étend dans le même plan que celui des pattes de fixation 72. Le bandeau 71 est sensiblement de forme en U, comme cela est rendu visible sur la figure 4. Le bandeau 71 entourne partiellement le renfort 6, préférentiellement les côtés transversaux avant et arrière ainsi qu'un côté intérieur du renfort 6.

La caisse de l'invention permet l'exploitation de l'espace au sein d'une garniture latérale du coffre, plus précisément, entre la garniture de coffre et le côté de caisse comportant le passage de roue interne. Il en résulte un gain de place au niveau du plancher. Ainsi, la caisse 1 comprend un plancher arrière doté d'un volume désormais disponible pour loger notamment d'autres équipements du véhicule, par exemple un recevoir d'un dispositif de dépollution, tel un réservoir d'urée.

En outre, la solution permet d'intégrer discrètement le module de haut-parleur dans le coffre arrière puisqu'il est de préférence caché par la garniture latérale du coffre. Le module de haut-parleur n'est alors pas visible, même après ouverture de la porte de coffre.

En remarque, la caisse de l'invention atteint donc l'objet recherché d'optimisation de l'encombrement au sein du plancher arrière et présente les avantages suivants :
- elle est compatible avec différents modules de haut-parleurs, en particulier des modules de haut-parleurs de différentes tailles, ce qui permet de standardiser au moins en partie la production de passages internes de roue, éventuellement entre différentes gammes de véhicules, et de générer des économies de production,
- la gamme d'emboutissage des passages internes de roue peut être aisément adaptée au type de module de haut-parleur, c'est-à-dire avec réalisation de l'ouverture 50 en cas de module de haut-parleur nécessitant une ouverture vers l'extérieur, et sans réalisation d'ouverture dans le cas contraire.

L'invention est particulièrement bien adaptée à un véhicule automobile doté d'un moteur à combustion interne nécessitant de moyens de dépollution au niveau de son système d'échappement.

Elle porte aussi sur un véhicule automobile équipé d'une telle caisse.

Enfin, bien que la solution ait été décrite pour un passage de roue arrière, elle pourrait également convenir à un passage de roue avant, en particulier dans le cas d'un véhicule automobile doté d'un moteur disposé à l'arrière. En effet, un véhicule automobile dont le compartiment moteur est situé à l'arrière est davantage contraint en termes d'encombrement au niveau des passages de roues arrière et, a *fortiori,* moins contraint au niveau des passages de roues avant.

## Revendications

1. Caisse (1) de véhicule automobile comportant au moins un passage (2) de roue (3), notamment un passage de roue arrière, réalisé par l'assemblage d'au moins une portion d'une doublure latérale (4) de caisse avec une pièce interne (5), la doublure latérale (4) de caisse étant une doublure de custode arrière délimitant une partie externe du passage (2) de roue, la pièce interne (5) étant une pièce de liaison de la doublure latérale à un plancher, notamment un plancher de coffre, la pièce interne (5) délimitant une partie intérieure du passage (2) de roue, **caractérisé en ce que** la pièce interne (5) comprend une ouverture (50) au travers de laquelle est rapporté soudé un renfort (6) d'un support inférieur (7) destiné à assurer au moins en partie le montage d'un module de haut-parleur (8), notamment un caisson de basses.

2. Caisse (1) selon la revendication précédente, **caractérisée en ce que** la pièce interne (5) comprend une paroi supérieure (51), notamment une partie incurvée autour des axes longitudinal (X) et transversal (Y) de sorte à délimiter la partie sommitale du passage (2) de roue, l'ouverture (50) de la pièce interne (5) est en forme de trou oblong d'axe approximativement longitudinal (X) réalisé au niveau de la paroi supérieure.

3. Caisse (1) selon la revendication précédente, **caractérisée en ce que** le renfort (6) de support inférieur (7) comprend en partie sommitale une surface d'appui (61) contre laquelle une zone inférieure du module de haut-parleur (8) est apte à venir en appui, la surface d'appui étant notamment plane ou sensiblement plane et disposée en saillie verticale hors de la pièce interne (5), notamment de la paroi supérieure (51).

4. Caisse (1) selon la revendication précédente, **caractérisée en ce que** le renfort (6) de support inférieur (7) comprend une ouverture (60) en forme de trou oblong centrée ou sensiblement centrée dans la surface d'appui (61).

5. Caisse (1) selon la revendication précédente, **caractérisée en ce qu'**elle comprend un moyen d'étanchéité (9), notamment au moins un joint à cellules fermées disposé le long d'un pourtour de l'ouverture (60) du renfort (6) de support inférieur (7), notamment un joint réalisé d'un seul tenant, s'étendant le long de la totalité d'un pourtour de l'ouverture du renfort de support inférieur.

6. Caisse (1) selon l'une quelconque des revendications précédentes, **caractérisée en ce que** le support inférieur (7) est une chape de fixation destinée à assurer le montage réversible du module de haut -parleur (8), la chape de fixation est rapportée soudée sur le renfort (6) de support inférieur de manière à l'entourer partiellement, notamment la partie du renfort (6) disposée en saillie verticale hors de la paroi supérieure (51).

7. Caisse (1) selon la revendication précédente, **caractérisée en ce que** la chape de fixation comprend un bandeau (71) de liaison au-delà duquel s'étend en saillie au moins une patte (72) de fixation, notamment deux pattes de fixation, disposée dans un plan sensiblement identique à celui de la surface d'appui (61) de la partie sommitale du renfort (6) de support inférieur (7).

8. Caisse (1) selon la revendication précédente, **caractérisée en ce que** le renfort (6) de support inférieur (7) comprend une collerette (62) périphérique réalisée notamment par emboutissage et disposée par dessous la pièce interne (5), le long d'un contour de l'ouverture (50) de la pièce interne (5), le renfort (6) de support inférieur étant fixé à la pièce interne (5) notamment par soudure.

9. Caisse (1) selon l'une quelconque des revendications précédentes, **caractérisée en ce que** le passage (2) de roue (3) est un élément constitutif d'un caisson de basses du module de haut-parleur (8), notamment une tuyère acoustique.

10. Caisse (1) selon l'une quelconque des revendications précédentes, **caractérisée en ce qu'**elle comprend un renfort (16) de doublure latérale (4) destiné à la fixation d'un support supérieur (17) destiné à assurer au moins en partie le montage du module de haut-parleur (8).

11. Caisse (1) selon la revendication précédente, **caractérisée en ce que** le renfort (16) de doublure latérale (4) est disposé sur un côté extérieur de la doublure latérale (4), le renfort (16) de doublure latérale comprenant au moins une vis (18) traversant la doublure latérale (4) destinées au montage réversible du support supérieur (17), notamment un pontet de fixation liant le module de haut-parleur (8) à la doublure latérale (4) de caisse.

12. Véhicule, notamment une automobile, **caractérisée en ce qu'**elle comprend une caisse (1) selon l'une quelconque des revendications précédentes.

## Patentansprüche

1. Kraftfahrzeugkarosserie (1) mit mindestens einem Durchlass (2) für ein Rad (3), insbesondere ein Hinterrad, der durch den Zusammenbau mindestens eines Abschnitts einer seitlichen Karosserieverkleidung (4) mit einem Innenteil (5) ausgeführt ist, wobei die seitliche Karosserieverkleidung (4) eine hintere C-Säulen-Verkleidung ist, die einen äußeren Teil des Raddurchlasses (2) begrenzt, wobei das Innenteil (5) ein Teil zur Verbindung der seitlichen Verkleidung mit einem Boden, insbesondere einem Kofferraumboden ist, wobei das Innenteil (5) einen inneren Teil des Raddurchlasses (2) begrenzt, **dadurch gekennzeichnet, dass** das Innenteil (5) eine Öffnung (50) umfasst, durch die eine Verstärkung (6) eines unteren Trägers (7) angeschweißt ist, der dazu bestimmt ist, zumindest teilweise die Montage eines Lautsprechermoduls (8), insbesondere eines Subwoofers, zu gewährleisten.

2. Karosserie (1) nach dem vorangehenden Anspruch, **dadurch gekennzeichnet, dass** das Innenteil (5) eine obere Wand (51) umfasst, insbesondere einen Teil, der um die Längsachse (X) und die Querachse (Y) so gekrümmt ist, dass er den Scheitelteil des Raddurchlasses (2) begrenzt, wobei die Öffnung (50) des Innenteils (5) die Form eines Langlochs mit ungefähr longitudinaler Achse (X) aufweist, das im Bereich der oberen Wand ausgeführt ist.

3. Karosserie (1) nach dem vorangehenden Anspruch, **dadurch gekennzeichnet, dass** die Verstärkung (6) des unteren Trägers (7) im Scheitelbereich eine Auflagefläche (61) umfasst, gegen die ein unterer Bereich des Lautsprechermoduls (8) zur Auflage kommen kann, wobei die Auflagefläche insbesondere eben oder im Wesentlichen eben ist und vertikal aus dem Innenteil (5), insbesondere aus der oberen Wand (51), herausragend angeordnet ist.

4. Karosserie (1) nach dem vorangehenden Anspruch, **dadurch gekennzeichnet, dass** die Verstärkung (6) der unteren Stütze (7) eine Öffnung (60) in Form eines Langlochs umfasst, die in der Auflagefläche (61) zentriert oder im Wesentlichen zentriert ist.

5. Karosserie (1) nach dem vorangehenden Anspruch, **dadurch gekennzeichnet, dass** sie ein Dichtungsmittel (9), insbesondere mindestens eine Dichtung mit geschlossenen Zellen, umfasst, die entlang eines Umfangs der Öffnung (60) der Verstärkung (6) des unteren Trägers (7) angeordnet ist, insbesondere eine einstückig gefertigte Dichtung, die sich entlang eines gesamten Umfangs der Öffnung der Verstärkung des unteren Trägers erstreckt.

6. Karosserie (1) nach einem der vorangehenden Ansprüche, **dadurch gekennzeichnet, dass** der untere Träger (7) ein Befestigungsjoch ist, das dazu bestimmt ist, die reversible Montage des Lautsprechermoduls (8) zu gewährleisten, wobei das Befestigungsjoch an der Verstärkung (6) des unteren Trägers angeschweißt ist, so dass es diese teilweise umgibt, insbesondere den Teil der Verstärkung (6), der vertikal aus der oberen Wand (51) herausragend angeordnet ist.

7. Karosserie (1) nach dem vorangehenden Anspruch, **dadurch gekennzeichnet, dass** das Befestigungsjoch ein Verbindungsband (77) umfasst, über das hinaus sich mindestens eine Befestigungslasche (72), insbesondere zwei Befestigungslaschen, herausragend erstrecken, die in einer Ebene angeordnet sind, die im Wesentlichen identisch mit der Auflagefläche (61) des Scheitelbereichs der Verstärkung (6) des unteren Trägers (7) ist.

8. Karosserie (1) nach dem vorangehenden Anspruch, **dadurch gekennzeichnet, dass** die Verstärkung (6) des unteren Trägers (7) einen umlaufenden Kragen (62) umfasst, der insbesondere durch Tiefziehen hergestellt und unter dem Innenteil (5) entlang einer Kontur der Öffnung (50) des Innenteils (5) angeordnet ist, wobei die Verstärkung (6) des unteren Trägers am Innenteil (5) insbesondere durch Schweißen befestigt ist.

9. Karosserie (1) nach einem der vorangehenden Ansprüche, **dadurch gekennzeichnet, dass** der Durchlass (2) des Rads (3) ein Bestandteil eines Subwoofers des Lautsprechermoduls (8), insbesondere eine akustische Düse, ist.

10. Karosserie (1) nach einem der vorangehenden Ansprüche, **dadurch gekennzeichnet, dass** sie eine Verstärkung (16) der seitlichen Verkleidung (4) umfasst, die zur Befestigung eines oberen Trägers (17) bestimmt ist, der zumindest teilweise die Montage des Lautsprechermoduls (8) gewährleisten soll.

11. Karosserie (1) nach dem vorangehenden Anspruch, **dadurch gekennzeichnet, dass** die Verstärkung (16) der seitlichen Verkleidung (4) an einer Außenseite der seitlichen Verkleidung (4) angeordnet ist, wobei die Verstärkung (16) der seitlichen Verkleidung mindestens eine Schraube (18) umfasst, die durch die seitliche Verkleidung (4) verläuft und für die reversible Montage des oberen Trägers (17) bestimmt ist, insbesondere eine Befestigungsbrücke, die das Lautsprechermodul (8) mit der seitlichen Karosserieverkleidung (4) verbindet.

12. Fahrzeug, insbesondere Kraftfahrzeug, **dadurch gekennzeichnet, dass** es eine Karosserie (1) nach einem der vorangehenden Ansprüche umfasst.

## Claims

1. Motor vehicle body (1) comprising at least one wheel (3) housing (2), notably a rear wheel housing, produced by the assembly of at least one portion of a body lateral lining (4) with an inner part (5), the body lateral lining (4) being a rear quarter lining delimiting an outer part of the wheel housing (2), the inner part (5) being a part for connecting the lateral lining to a floor, notably a trunk floor, the inner part (5) delimiting an interior part of the wheel housing (2), **characterized in that** the inner part (5) comprises an opening (50) through which is added and welded a reinforcement (6) of a lower support (7) intended to at least partially ensure the mounting of a loudspeaker module (8), notably a subwoofer.

2. Body (1) according to the preceding claim, **characterized in that** the inner part (5) comprises a top wall (51), notably a part incurved about longitudinal (X) and transverse (Y) axes so as to delimit the top part of the wheel housing (2), the opening (50) of the inner part (5) is in the form of an oblong hole of approximately longitudinal axis (X) produced in the top wall.

3. Body (1) according to the preceding claim, **characterized in that** the reinforcement (6) of the lower support (7) comprises, in the top part, a bearing surface (61) against which a bottom zone of the loudspeaker module (8) can bear, the bearing surface being notably planar or substantially planar and disposed protruding vertically out of the inner part (5), notably out of the top wall (51).

4. Body (1) according to the preceding claim, **characterized in that** the reinforcement (6) of the lower support (7) comprises an opening (60) in the form of an oblong hole centered or substantially centered in the bearing surface (61).

5. Body (1) according to the preceding claim, **characterized in that** it comprises a sealing means (9), notably at least one seal with closed cells disposed along a perimeter of the opening (60) of the reinforcement (6) of the lower support (7), notably a seal produced in a single piece, extending along all of a perimeter of the opening of the lower support reinforcement.

6. Body (1) according to any one of the preceding claims, **characterized in that** the lower support (7) is a fixing fork joint intended to ensure the reversible mounting of the loudspeaker module (8), the fixing fork joint is added and welded onto the lower support reinforcement (6) so as to partially surround it, notably the part of the reinforcement (6) that is disposed protruding vertically out of the top wall (51).

7. Body (1) according to the preceding claim, **characterized in that** the fixing fork joint comprises a connecting strip (71) beyond which protrudingly extends at least one fixing lug (72), notably two fixing lugs, disposed in a plane substantially identical to that of the bearing surface (61) of the top part of the reinforcement (6) of the lower support (7).

8. Body (1) according to the preceding claim, **characterized in that** the reinforcement (6) of the lower support (7) comprises a peripheral flange (62) produced notably by chasing and disposed under the inner part (5), along an outline of the opening (50) of the inner part (5), the lower support reinforcement (6) being fixed to the inner part (5) notably by welding.

9. Body (1) according to any one of the preceding claims, **characterized in that** the wheel (3) housing (2) is a constituent element of a subwoofer of the loudspeaker module (8), notably an acoustic nozzle.

10. Body (1) according to any one of the preceding claims, **characterized in that** it comprises a reinforcement (16) of the lateral lining (4) intended for the fixing of an upper support (17) intended to at least partly ensure the mounting of the loudspeaker module (8).

11. Body (1) according to the preceding claim, **characterized in that** the reinforcement (16) of the lateral lining (4) is disposed on an outer side of the lateral lining (4), the lateral lining reinforcement (16) comprising at least one screw (18) passing through the lateral lining (4) and intended for the reversible mounting of the upper support (17), notably a fixing bridge linking the loudspeaker module (8) to the lateral lining (4) of the body.

12. Vehicle, notably a motor vehicle, **characterized in that** it comprises a body (1) according to any one of the preceding claims.
